# EUROPÄISCHE PATENTSCHRIFT

(11) **EP 2 502 683 B1**
(45) Veröffentlichungstag und Bekanntmachung des Hinweises auf die Patenterteilung: **27.08.2014**
(21) Anmeldenummer: 11002405.6
(22) Anmeldetag: 23.03.2011
(51) Int. Cl.: B21D 39/03, B29C 65/00, B29C 65/60, B29C 65/64, F16B 5/04

(54) **Hybrider Werkstoffverbund sowie ein Verfahren und eine Vorrichtung zu seiner Herstellung**
Hybrid material compound and a method and device for producing same
Matériau composite hybride ainsi que procédé et dispositif de fabrication

(43) Veröffentlichungstag der Anmeldung: 26.09.2012
(73) Patentinhaber: SMP Deutschland GmbH, 79268 Bötzingen (DE)
(72) Erfinder: Durupt, Xavier, 68320 Jebsheim (FR); Stocker, Tim, 79235 Vogtsburg (DE)
(74) Vertreter: Patentanwälte Westphal, Mussgnug & Partner

(56) Entgegenhaltungen:
- EP-A1- 0 711 614
- WO-A2-2010/139606
- WO-A2-2011/015345
- DE-A1- 19 929 377
- DE-C1- 4 009 813
- US-A- 5 884 386

## Beschreibung

Die vorliegende Erfindung betrifft einen hybriden Werkstoffverbund aus mindestens zwei flächig aufeinander liegenden Fügepartnern sowie ein Verfahren und eine Vorrichtung zu seiner Herstellung, wobei ein nichtgelochter umformbarer metallischer Fügepartner mit einem nichtmetallischen Fügepartner verbunden ist.

In der DE 20 2009 007 835 U1 wird ein hybrider Werkstoffverbund aus mehreren Fügepartnern beschrieben, die im Verbindungsbereich flächig aufeinander liegen. Dabei wird ein ungelochter erster Fügepartner aus einem umformbaren nichtmetallischen Werkstoff mit einem ungelochten zweiten Fügepartner aus einem umformbaren metallischen oder nichtmetallischen Werkstoff so verbunden, dass das Material des ersten und des zweiten Fügepartners im Verbindungsbereich durch den Eindruck eines Stempels derart ineinander geformt werden, dass deren Werkstoffe zumindest bereichsweise radial nach außen verdrängt werden und so eine mechanische Verklammerung zwischen dem ersten und dem zweiten Fügepartner gebildet wird. Voraussetzung für die Ausbildung einer Verbindung zwischen den Fügepartnern ist, dass beide Fügepartner umformbar sind.

Die DE 101 43 155 A1 beschreibt ein Verfahren zum Verbinden von Bauteilen aus Faserverbund-Kunststoffen mit einem Gegenbauteil, wobei das Gegenbauteil eine Bohrung aufweist. Dabei wird mit einem Stempel das Material des Faserverbund-Kunststoffes durch die Bohrung gedrückt und durch einen Gegenstempel auf der Seite des Gegenbauteils wird das durchgedrückte Volumen des Faserverbund-Kunststoffes zu einem Formkopf geformt.

In der DE 199 29 377 A1 werden drei Platten durch einen Stempel gemeinsam verformt und in eine Tiefziehöffnung hineingedrückt. Die drei Schichten werden hierbei gemeinsam verformt und zwischen dem Stempel und Tiefziehöffnung miteinander verquetseht.

In der DE 10 2004 038 921 A1 wird ein Verfahren und eine Vorrichtung zum Verbinden von Bauteilen beschrieben, mit dem umformbare Bauteile, wie z. B. Stahlbleche, mit nicht umformbaren Bauteilen, wie z. B. Bauteilen aus Federstahl, Magnesium, Kunststoff etc., verbunden werden. Dabei wird während des Fügevorgangs in einem Hub das nicht umformbare Bauteil gelocht, während das andere Bauteil mit einem Stempel durch das Loch gezogen wird, bis es auf dem gelochten Abschnitt mit einem Amboss radial verpresst wird, wobei das Loch unterhalb der Bauteiloberfläche des nicht umformbaren Materials durch das formbare Material hinterformt wird.

Hybride Werkstoffverbunde finden immer häufiger Verwendung in Strukturbauteilen, wobei meist Kunststoffbauteile mit metallischen Bauteilen verbunden werden. Dabei werden die Fügepartner nach Möglichkeit in einem Schritt miteinander verbunden, wobei sich herausgestellt hat, dass die Festigkeit einer direkten Verbindung zwischen Kunststoff und Metallblech häufig nicht ausreichend ist, um starken mechanischen Belastungen zu genügen, wobei insbesondere unterschiedliche klimatische Bedingungen, denen eine derartige Verbindung standhalten muss, enorme Anforderungen an die Festigkeit einer solchen Verbindung stellen. Dabei bereitet insbesondere das unterschiedliche thermische Verhalten von Metallen und Kunststoffen Probleme.

Aufgabe der vorliegenden Erfindung ist es, einen hybriden Werkstoffverbund zur Verfügung zu stellen, der die Nachteile des Standes der Technik nicht aufweist.

Eine weitere Aufgabe der vorliegenden Erfindung ist es, ein Verfahren zur Herstellung eines derartigen hybriden Werkstoffverbundes zur Verfügung zu stellen.

Ebenso ist es eine Aufgabe der vorliegenden Erfindung eine Vorrichtung zur Herstellung eines hybriden Werkstoffverbundes zur Verfügung zu stellen.

Gelöst werden diese Aufgaben durch ein Verfahren zur Herstellung eines hybriden Werkstoffverbunds mit den Merkmalen des Anspruchs 1, einen hybriden Werkstoffverbund mit den Merkmalen des Anspruchs 8 und eine Vorrichtung zur Herstellung eines hybriden Werkstoffverbundes mit den Merkmalen des Anspruchs 10. Vorteilhafte Weiterentwicklungen und Ausgestaltungen des erfindungsgemäßen Verfahrens, des erfindungsgemäßen hybriden Werkstoffverbunds oder der Vorrichtung zur Herstellung des erfindungsgemäßen Werkstoffverbundes sind Gegenstand der jeweiligen Unteransprüche.

Das erfindungsgemäße Verfahren zur Herstellung eines hybriden Werkstoffverbunds aus mindestens zwei flächig aufeinanderliegenden Fügepartnern, wobei ein nichtgelochter umformbarer metallischer Fügepartner mit einem nichtmetallischen Fügepartner verbunden werden soll, basiert darauf, dass der Formschluss zwischen den beiden Fügepartnern indirekt mit Hilfe eines verformbaren nichtgelochten Unterlegelements erfolgt. Dabei wird der nichtmetallische Fügepartner entweder bei der Fertigung oder vor dem Fügevorgang gelocht und der nichtgelochte metallische Fügepartner wird mit einem Stempel durch das Loch im nichtmetallischen Fügepartner gepresst und auf der Rückseite des Loches mit dem von einem Gegenstempel gehaltenen Unterlegelement formschlüssig verbunden. Während des Prozesses werden der metallische Fügepartner (Blech) und die Unterlegscheibe verformt. Durch den Eindruck des Stempels im Zusammenspiel mit dem Gegenstempel wird eine mechanische Verklammerung zwischen dem metallischen Fügepartner und dem Unterlegelement ausgebildet und der nichtmetallische Fügepartner wird als Zwischenfügepartner zwischen dem metallischen Fügepartner und dem Unterlegelement eingeklemmt.

Als nichtmetallischer Fügepartner können Fügepartner aus einem Material ausgewählt aus der Gruppe Kunststoff, faserverstärkter Kunststoff, Faserverbundwerkstoff, Holz, Papierverbund, Pappe, Glas, Keramik, Textil und eine Kombination der vorgenannten Materialien eingesetzt werden.

Bei einer bevorzugten Ausgestaltung der vorliegenden Erfindung wird als nichtmetallischer Fügepartner ein gelochter Fügepartner aus Kunststoff eingesetzt, wobei das Unterlegelement vorteilhaft eine Metallscheibe ist.

Eine weitere vorteilhafte Ausgestaltung des erfindungsgemäßen Verfahrens sieht vor, als Unterlegelement ein Blechbauteil einzusetzen, sodass der nichtmetallische Fügepartner sandwichartig zwischen zwei metallischen Bauteilen als Fügepartnern eingeklemmt wird.

Das Verfahren ist besonders für die Automobilbranche geeignet, wo beim Zusammenbau der Karosserie häufig unterschiedliche Werkstoffe miteinander verbunden werden müssen. Der Zusammenbau der Karosserie erfolgt in der Regel vor Ort beim Autohersteller und ist weitgehend automatisiert bzw. rationalisiert. So muss das Fügen von unterschiedlichen Karosserieteilen beispielsweise nach Möglichkeit in einem Verfahrensschritt erfolgen, wobei gemäß der vorliegenden Erfindung vorzugsweise ein spezifisches Clinch-Werkzeugsystem mit einem Stempel-/Gegenstempelmechanismus eingesetzt wird, das im einfachsten Fall als sogenannte Clinch-Zange manuell eingesetzt oder je nach Anforderungen als Werkzeugsystem vollautomatisch betrieben werden kann.

Somit umfasst die vorliegende Erfindung auch eine Vorrichtung zur Herstellung eines hybriden Werkstoffverbunds aus mindestens zwei flächig aufeinander liegenden Fügepartnern, wobei ein nichtgelochter metallischer Fügepartner mit einem gelochten nichtmetallischen Fügepartner verbunden ist. Diese Vorrichtung umfasst einen Stempel-/Gegenstempelmechanismus, wobei der Stempel und Gegenstempel entlang einer Hauptarbeitsachse aufeinander zu und voneinander weg bewegbar sind. Der Gegenstempel weist eine Aussparung auf, die so auf den Stempel abgestimmt ist, dass die mindestens zwei Fügepartner indirekt mit Hilfe eines Unterlegelements in der Aussparung des Gegenstempels zwischen Stempel und Gegenstempel formschlüssig verbindbar sind und eine mechanische Verklammerung zwischen dem metallischen Fügepartner und dem Unterlegelement ausbildbar ist.

Bei einer vorteilhaften Ausgestaltung der Vorrichtung zur Herstellung des erfindungsgemäßen Werkstoffverbunds weist der Stempel einen zapfenförmigen Vorsprung auf, der auf die Aussparung im Gegenstempel abgestimmt ist.

Weiterhin ist es vorteilhaft, wenn Stempel und Gegenstempel in einer Führung angeordnet sind, in der dann auch das Unterlegelement passend positioniert werden kann.

Entsprechend kann auch eine manuell zu betreibende Clinch-Zange ausgerüstet sein, wobei dann ein teilautomatischer Betrieb dadurch erreicht wird, dass die Clinch-Zange ein Magazin für Unterlegelemente umfasst, aus dem dann nach jedem Clinchen ein Unterlegelement für den nächsten Clinch-Vorgang nachgeliefert wird.

Gegenstand der Erfindung ist auch ein hybrider Werkstoffverbund aus mindestens zwei flächig aufeinander liegenden Fügepartnern, wobei ein nichtgelochter umformbarer metallischer Fügepartner mit einem gelochten nichtmetallischen Fügepartner verbunden ist. Zwischen den beiden Fügepartnern ist ein indirekter Formschluss mit Hilfe eines Unterlegelements ausgebildet, wobei der metallische Fügepartner durch das Loch des nichtmetallischen Fügepartners mit dem Unterlegelement formschlüssig verbunden ist und eine mechanische Verklammerung zwischen dem metallischen Fügepartner und dem Unterlegelement ausgebildet ist, wobei der nichtmetallische Fügepartner als Zwischenfügepartner zwischen dem metallischen Fügepartner und dem Unterlegelement eingeklemmt ist.

Bei einer besonderen Ausgestaltung des erfindungsgemäßen Werkstoffverbundes wird ein metallisches Bauteil als Unterlegelement eingesetzt, so dass beispielsweise ein Werkstoffverbund aus drei flächig aufeinander liegenden Fügepartnern vorliegt, wobei der Formschluss zwischen den beiden metallischen Fügepartner ausgebildet ist, während der nichtmetallische Fügepartner als Zwischenfügepartner sandwichartig zwischen den beiden metallischen Fügepartnern eingeklemmt ist.

Mit Hilfe des erfindungsgemäßen Verfahrens können außerordentlich hohe Festigkeiten beim Fügen von hybriden Werkstoffverbunden erreicht werden. So wurden beispielsweise bei einem hybriden Werkstoffverbund aus einem metallischen Karosserieblech und einem faserverstärktem Kunststoff 500 N normale Kraft pro Anbindungspunkt erreicht. Im Vergleich dazu liegt die vom Anwender geforderte Mindestkraft bei einem Schweißpunkt zwischen Kunststoff und Metall bei 200 N pro Anbindungspunkt.

Die Lochung des nichtmetallischen Zwischenfügepartners kann schon bei seiner Herstellung oder vor dem Formschluss mit dem metallischen Fügepartner erfolgen.

Im Folgenden wird die vorliegende Erfindung anhand von Zeichnungen ausführlich erläutert. Dabei zeigen:
- Fig. 1 bis 6: in einer Schnittdarstellung die einzelnen Verfahrensschritte des erfindungsgemäßen Verfahrens, ausgehend von dem gelochten Kunststoffbauteil bis hin zum hybriden Werkstoffverbund und
- Fig. 7: in einer Schnittdarstellung einen schematischen Ausschnitt aus einer erfindungsgemäßen Vorrichtung zur Herstellung eines hybriden Werkstoffverbunds.

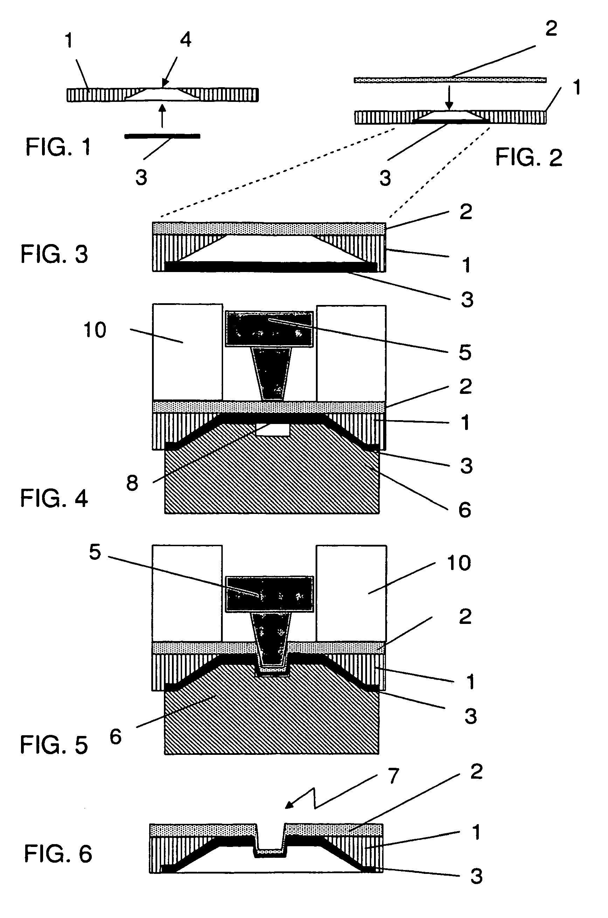

In der Figur 1 ist eine Schnittdarstellung eines Ausschnitts eines gelochten nichtmetallischen Fügepartner 1 zu sehen, zusammen mit einem Unterlegelement 3, das in das Loch 4 im nichtmetallischen Fügepartner 1 eingeführt wird.

Dabei ist das Unterlegelement 3 so dimensioniert, dass der Durchmesser des Unterlegelements den Lochdurchmesser überschreitet, wobei das Unterlegelement auf der Rückseite des Loches 4 vorteilhaft auf einen zurückversetzten Randbereich aufgelegt werden kann, was in Figur 2 wiedergegeben ist. Daneben ist in der Figur 2 zusätzlich ein metallischer Fügepartner 2 zu sehen, der flächig auf den nichtmetallischen Fügepartner 1 gelegt wird.

Ein vergrößerter Ausschnitt dieser Anordnung ist in der Figur 3 zu sehen.

In der Figur 4 ist ebenfalls in einer Schnittdarstellung der erste Schritt zum Formschluss zwischen den beiden Fügepartnern 1 und 2 zu sehen, wobei das Unterlegelement 3 mit Hilfe des Gegenstempels 6 in das Loch 4 im nichtmetallischen Fügepartner 1 gedrückt wird, während gleichzeitig von oben der metallische Fügepartner 2 mit dem Stempel 5 durch das Loch des nichtmetallischen Fügepartners 1 gepresst wird. Dabei wird der metallische Fügepartner 2 auf der Rückseite des Loches mit dem von dem Gegenstempel 6 gehaltenen Unterlegelement 3 formschlüssig verbunden, wobei der Stempel 5 den metallischen Fügepartner 2 zusammen mit dem Unterlegelement 3 in eine Aussparung 8 des Gegenstempels 6 presst. Auf diese Weise wird im Zusammenspiel der beiden Stempel eine mechanische Verklammerung zwischen dem metallischen Fügepartner 2 und dem Unterlegelement 3 ausgebildet, wobei der nichtmetallische Fügepartner 1 als Zwischenfügepartner zwischen dem metallischen Fügepartner 2 und dem Unterlegelement 3 eingeklemmt wird. Mit Hilfe der Führung 10 für den Stempel 5 wird der metallische Fügepartner 2 während des Formschlusses auf dem nichtmetallischen Fügepartner fixiert, wodurch ein ungewolltes Verformen oder Aufwölben des metallischen Fügepartners während des Formschlusses verhindert wird.

Der zweite Schritt des erfindungsgemäßen Verfahrens ist in der Figur 5 wiedergegeben. An dieser Stelle soll angemerkt werden, dass in der Praxis Gegenstempel 6 und Stempel 5 wie bei einer Zange synchron fungieren, sodass während das Unterlegelement 3 mit dem Gegenstempel 6 von der Rückseite her in das Loch 4 im nichtmetallischen Fügepartner 1 gepresst wird, gleichzeitig mit Hilfe des Stempels 5 der metallische Fügepartner 2 zusammen mit dem Unterlegelement 3 in die Aussparung 8 des Gegenstempels 6 gedrückt wird.

Die Figur 6 schließlich zeigt den fertigen hybriden Werkstoffverbund 7, der aus mindestens zwei flächig aufeinander liegenden Fügepartnern besteht, wobei ein nicht gelochter umformbarer metallischer Fügepartner 2 mit einem gelochten nichtmetallischen Fügepartner 1 verbunden ist. Zwischen den beiden Fügepartnern ist ein indirekter Formschluss mit Hilfe eines Unterlegelements 3 ausgebildet, wobei der metallische Fügepartner 2 durch das Loch 4 des nichtmetallischen Fügepartners 1 mit dem Unterlegelement 3 formschlüssig verbunden ist und eine mechanische Verklammerung zwischen dem metallischen Fügepartner 2 und dem Unterlegelement 3 ausgebildet ist, während der nichtmetallische Fügepartner 1 als Zwischenfügepartner zwischen dem metallischen Fügepartner 2 und dem Unterlegelement 3 eingeklemmt ist.

Ein solcher hybrider Werkstoffverbund 7 zeigt eine außerordentlich hohe Festigkeit, wobei an den Verbindungspunkten bei einer entsprechenden Optimierung mehr als 500 N normale Kraft erreicht wird. Dies deutet darauf hin, dass die Materialien des metallischen Fügepartners 2 und der Unterlegscheibe 3 beim Verpressen ineinander geformt werden und dabei möglicherweise teilweise überlappen. Dieser Effekt kann durch eine entsprechende geometrische Ausgestaltung des Stempels 5 und der Aussparung 8 im Gegenstempel 6 zusätzlich verstärkt werden.

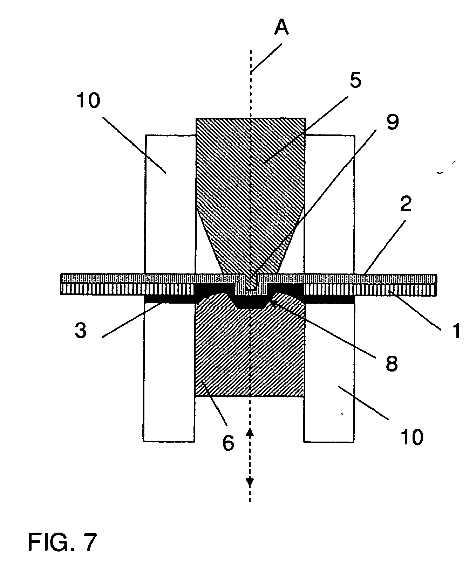

Die Figur 7 zeigt in einer schematischen Schnittdarstellung einen Ausschnitt aus einer Vorrichtung zur Herstellung eines hybriden Werkstoffverbunds aus mindestens zwei flächig aufeinander liegenden Fügepartnern, wobei ein nichtgelochter umformbarer metallischer Fügepartner 2 mit einem nichtmetallischen Fügepartner 1 verbunden ist. Die Vorrichtung weist einen Stempel-/Gegenstempelmechanismus auf, bei dem ein Stempel 5 und einen Gegenstempel 6 entlang einer Hauptachse A aufeinander zu und voneinander weg bewegbar sind. Der Gegenstempel 6 weist eine Aussparung 8 auf, die auf den Stempel 5 abgestimmt ist. Gleichzeitig weist der Stempel 5 einen zapfenförmigen Vorsprung 9 auf, mit dessen Hilfe der metallische Fügepartner 2 zusammen mit dem Unterlegelement 3 in die Aussparung 8 im Gegenstempel 6 gepresst wird und so mit dem Unterlegelement 3 formschlüssig verbunden wird. Beide Stempel sind in einer Führung 10 angeordnet, wobei die Führung 10 dem Loch in dem nichtmetallischen Fügepartner 1 angeglichen ist. Das Unterlegelement 3 ist so dimensioniert, dass es den Lochdurchmesser deutlich überschreitet, so dass der nichtmetallische Fügepartner 1 als Zwischenfügepartner zwischen dem metallischen Fügepartner 2 und dem Unterlegelement 3 eingeklemmt wird.

Bei der in der Figur 7 wiedergegebenen Momentaufnahme des Fertigungsprozesses zur Herstellung eines hybriden Werkstoffverbundes ist der fertige Werkstoffverbund zwischen den beiden zusammengefahrenen Stempeln und damit der letzte Schritt im Fertigungsprozess zu sehen. Die vorangegangenen Verfahrensschritte entsprechen im Wesentlichen den Schritten, die bereit in den Figuren 1 bis 5 zu sehen sind, wobei das Unterlegelement 3 mit dem Gegenstempel 6 in das Loch im nichtmetallischen Fügepartner gedrückt wird, während synchron der Stempel 5 mit seinem zapfenförmigen Vorsprung 9 eine mechanische Verklammerung zwischen dem metallischen Fügepartner 2 und dem Unterlegelement 3 bewirkt. Bei diesem Vorgang bewegen sich die Stempel entlang einer Hauptarbeitsachse A aufeinander zu.

### Bezugszeichenliste

- 1: Nichtmetallischer Fügepartner
- 2: Metallischer Fügepartner
- 3: Unterlegelement
- 4: Loch
- 5: Stempel
- 6: Gegenstempel
- 7: Hybrider Werkstoffverbund
- 8: Aussparung
- 9: Vorsprung
- 10: Führung

- A: Hauptarbeitsachse

## Patentansprüche

1. Verfahren zur Herstellung eines hybriden Werkstoffverbunds (7) aus mindestens zwei flächig aufeinander liegenden Fügepartnern, wobei ein nichtgelochter umformbarer metallischer Fügepartner (2) mit einem nichtmetallischen Fügepartner (1) verbunden wird, wobei
der Formschluss zwischen den beiden Fügepartnern indirekt mit Hilfe eines verformbaren nicht gelochten Unterlegelements (3) erfolgt, wobei der nichtmetallische Fügepartner (1) vor dem Fügevorgang gelocht wird und der nichtgelochte metallische Fügepartner (2) mit einem Stempel (5) durch ein Loch (4) im nichtmetallischen Fügepartner (1) gepresst wird und auf der Rückseite des Loches (4) mit dem von einem Gegenstempel (6) gehaltenen Unterlegelement (3) formschlüssig verbunden wird, wobei durch den Eindruck des Stempels (5) in eine Aussparung (8) im Gegenstempel (6) eine mechanische Verklammerung zwischen dem metallischen Fügepartner (2) und dem Unterlegelement (3) ausgebildet wird und der nichtmetallische Fügepartner (1) als Zwischenfügepartner zwischen dem metallischen Fügepartner (2) und dem Unterlegelement (3) eingeklemmt wird,
**dadurch gekennzeichnet, dass**
das Unterlegelement (3) mit dem Gegenstempel (6) in das Loch im nichtmetallischen Fügepartner (1) gedrückt wird, während synchron der Stempel (5) mit seinem zapfenförmigen Vorsprung (9) eine mechanische Verklammerung zwischen dem metallischen Fügepartner (2) und dem Unterlegelement (3) bewirkt, wobei sich bei diesem Vorgang der Stempel (5) und der Gegenstempel (6) in einer Führung (10) angeordnet sind und entlang einer Hauptarbeisache (A) aufeinander zubewegen.

2. Verfahren nach Anspruch 1,
**dadurch gekennzeichnet, dass**
als nichtmetallischer Fügepartner (1) ein Fügepartner aus einem Material ausgewählt aus der Gruppe Kunststoff, faser-verstärkter Kunststoff, Faserverbundwerkstoff, Holz, Papierverbund, Pappe, Glas, Keramik, Textil oder eine Kombination der vorgenannten Materialien eingesetzt wird.

3. Verfahren nach Anspruch 1,
**dadurch gekennzeichnet, dass**
als nichtmetallischer Fügepartner (1) ein gelochter Fügepartner aus Kunststoff eingesetzt wird.

4. Verfahren nach einem der Ansprüche 1 bis 3,
**dadurch gekennzeichnet, dass**
als Unterlegelement (3) eine Metallscheibe eingesetzt wird.

5. Verfahren nach einem der Ansprüche 1 bis 3,
**dadurch gekennzeichnet, dass**
als Unterlegelement (3) ein Blechbauteil eingesetzt wird.

6. Verfahren nach einem der Ansprüche 1 bis 5,
**dadurch gekennzeichnet, dass**
der Formschluss mit Hilfe eines vollautomatischen Clinch-Werkzeugsystems mit einem Stempel- und Gegenstempelmechanismus erfolgt.

7. Verfahren nach einem der Ansprüche 1 bis 5,
**dadurch gekennzeichnet, dass**
der Formschluss mit Hilfe einer einen Stempel (5) und einen Gegenstempel (6) aufweisenden hydraulisch betriebenen Clinch-Zange erfolgt.

8. Vorrichtung zur Herstellung eines hybriden Werkstoffverbunds (7) aus mindestens zwei flächig aufeinander liegenden Fügepartnern, insbesondere zur Durchführung eines Verfahrens nach Anspruch 1, wobei ein nichtgelochter umformbarer metallischer Fügepartner (2) mit einem gelochten nichtmetallischem Fügepartner (1) verbunden wird, mit einem Stempel- und Gegenstempelmechanismus,
wobei
der Gegenstempel (6) eine auf den Stempel (5) abgestimmte Aussparung (8) aufweist, wobei die mindestens zwei Fügepartner indirekt mit Hilfe eines verformbaren nichtgelochten Unterlegelements (3) zwischen Stempel (5) und Gegenstempel (6) in der Aussparung (8) formschlüssig miteinander verbindbar sind, wobei eine mechanische Verklammerung zwischen dem metallischen Fügepartner (2) und dem Unterlegelement (3) ausbildbar ist, wobei der Stempel (5) einen zapfenförmigen Vorsprung (9) aufweist, der auf die Aussparung (8) im Gegenstempel (6) abgestimmt und in die Aussparung (8) im Gegenstempel (6) einführbar ist, **dadurch gekennzeichnet, dass** der Stempel (5) und der Gegenstempel (6) in einer Führung (10) angeordnet und entlang einer Hauptarbeitsachse (A) aufeinander zu und voneinander weg bewegbar sind.

9. Vorrichtung nach Anspruch 8,
**dadurch gekennzeichnet, dass**
die Vorrichtung eine hydraulisch betriebene Clinch-Zange ist.

10. Vorrichtung nach Anspruch 9,
**dadurch gekennzeichnet, dass**
die Clinch-Zange ein Magazin für Unterlegelemente (3) umfasst.

## Claims

1. A method of producing a hybrid composite material (7) from at least two joining members arranged flat one upon the other, wherein a non-perforated, deformable metallic joining member (2) is joined to a non-metallic joining member (1), wherein the positive locking between the two joining members is made indirectly with the aid of a deformable, non-perforated underlay element (3), wherein the non-metallic joining member (1) is perforated before the joining procedure and the non-perforated metallic joining member (2) is pressed by a ram (5) through a perforation (4) in the non-metallic joining member (1) and is joined on the rear side of the perforation (4) with positive locking to the underlay element (3) held by a counter ram (6), wherein a mechanical clamping between the metallic joining member (2) and the underlay element (3) is formed in a recess (8) in the counter ram (6) and the non-metallic joining member (1) is clamped as an intermediate joining member between the metallic joining member (2) and the underlay element (3), **characterized in that** the underlay element (3) is pressed by the counter ram (6) into the perforation in the non-metallic joining member (1) whilst at the same time the pin-shaped projection (9) of the ram (5) produces a mechanical clamping between the metallic joining member (2) and the underlay element (3), wherein during this procedure the ram (5) and the counter ram (6) are arranged in a guide (10) and move towards each other along a main operational axis (A).

2. A method according to claim 1, **characterized in that** a joining member of a material selected from the group of plastics material, fibre-reinforced plastics material, fibre composite material, wood, paper composite, cardboard, glass, ceramic material, textile material or a combination of the aforesaid materials is used as the non-metallic joining member (1).

3. A method according to claim 1, **characterized in that** a perforated joining member of plastics material is used as the non-metallic joining member (1).

4. A method according to any one of claims 1 to 3, **characterized in that** a metallic disc is used as the underlay element (3).

5. A method according to any one of claims 1 to 3, **characterized in that** a sheet metal component is used as the underlay element (3).

6. A method according to any one of claims 1 to 5, **characterized in that** the positive locking is effected with the aid of a fully automatic clinching tool system with a ram and counter-ram mechanism.

7. A method according to any one of claims 1 to 5, **characterized in that** the positive locking is effected with the aid of a pair of hydraulically operated clinching pliers having a ram (5) and a counter ram (6).

8. An apparatus for producing a hybrid composite material (7) from at least two joining members arranged flat one upon the other, in particular for performing a method according to claim 1, wherein a non-perforated, deformable metallic joining member (2) is joined to a perforated, non-metallic joining member (1), with a ram and counter-ram mechanism, wherein the counter ram (6) has a recess (8) adapted to the ram (5), wherein the at least two joining members are capable of being joined to each other with positive locking indirectly with the aid of a deformable, non-perforated underlay element (3) between the ram (5) and the counter ram (6) in the recess (8), wherein a mechanical clamping is capable of being formed between the metallic joining member (2) and the underlay element (3), wherein the ram (5) has a pin-shaped projection (9) which is adapted to the recess (8) in the counter ram (6) and is capable of being inserted into the recess (8) in the counter ram (6), **characterized in that** the ram (5) and the counter ram (6) are arranged in a guide (10) and are capable of being moved towards each other and away from each other along a main operational axis (A).

9. An apparatus according to claim 8, **characterized in that** the apparatus is a pair of hydraulically operated clinching pliers.

10. An apparatus according to claim 9, **characterized in that** the clinching pliers embrace a magazine for underlay elements (3).

## Revendications

1. Procédé d'obtention d'un matériau composite hybride (7) à partir d'au moins deux pièces à joindre reposant l'une sur l'autre selon un plan, selon lequel une pièce à joindre métallique déformable (2) non percée est reliée à une pièce à joindre non métallique (1),
selon lequel
la liaison par la forme des deux pièces à joindre est réalisée de manière indirecte à l'aide d'un élément de base (3) déformable non percé, la pièce à joindre non métallique (1) est percée avant le processus de jointure et la pièce à joindre métallique non percée (2) est comprimée, à l'aide d'un poinçon (5) au travers d'un perçage (4) dans la pièce à joindre non métallique (1), et est reliée par une liaison par la forme sur la face arrière du perçage (4) avec l'élément de base (3) maintenu par un contre-poinçon (6), suite à l'enfoncement du poinçon (5) dans un évidement (8) du contre-poinçon (6), un agrafage mécanique est réalisé entre la pièce à joindre métallique (2) et l'élément de base (3), et la pièce à joindre non métallique (1) est bloquée en tant que pièce à joindre intermédiaire entre la pièce à joindre métallique (2) et l'élément de base (3),
**caractérisé en ce que**
l'élément de base (3) est comprimé avec le contre-poinçon (6) dans le perçage de la pièce à joindre non métallique (1), tandis qu'en synchronisme le poinçon (5) permet d'obtenir par sa saillie (9) en forme de tenon un agrafage mécanique entre la pièce à joindre métallique (2) et l'élément de base (3), pendant ce processus, le poinçon (5) et le contre-poinçon (6) étant positionnés dans un guide (10) et déplacés l'un par rapport à l'autre le long d'un axe de travail principal (A).

2. Procédé conforme à la revendication 1,
**caractérisé en ce que**
en tant que pièce à joindre non métallique (1) on utilise une pièce à joindre en un matériau choisi dans le groupe des matériaux synthétiques, des matériaux synthétiques renforcés par des fibres, des matériaux composites à base de fibres, du bois, des composites de papier, du carton, du verre, des céramiques, des matériaux textiles ou une combinaison de ces matériaux.

3. Procédé conforme à la revendication 1,
**caractérisé en ce que**
en tant que pièce à joindre non métallique (1) on utilise une pièce à joindre percée en matériau synthétique.

4. Procédé conforme à l'une des revendications 1 à 3,
**caractérisé en ce que**
en tant qu'élément de base (3) on utilise un disque en métal.

5. Procédé conforme à l'une des revendications 1 à 3,
**caractérisé en ce que**
en tant qu'élément de base (3) on utilise une pièce en tôle.

6. Procédé conforme à l'une des revendications 1 à 5,
**caractérisé en ce que**
la liaison par la forme est effectuée à l'aide d'un système d'outils de sertissage totalement automatique comportant un mécanisme de poinçon et un mécanisme de contre-poinçon.

7. Procédé conforme à l'une des revendications 1 à 5,
**caractérisé en ce que**
la liaison par la forme est effectuée à l'aide d'une pince clinch à actionnement hydraulique comportant un poinçon (5) et un contre-poinçon (6).

8. Procédé d'obtention d'un matériau composite hybride (7) à partir d'au moins deux pièces à joindre reposant l'une sur l'autre selon un plan, en particulier pour permettre la mise en oeuvre du procédé conforme à la revendication 1,
selon lequel une pièce à joindre métallique déformable (2) non percée est reliée à une pièce à joindre non métallique (1) percée, comportant un mécanisme de poinçon et un mécanisme de contre-poinçon, le contre-poinçon (6) comportant un évidement (8) adapté au poinçon (5), les pièces à joindre qui sont au moins au nombre de deux pouvant être indirectement reliées l'une à l'autre par une liaison par la forme à l'aide d'un élément de base (3) déformable non percé entre le poinçon (5) et le contre-poinçon (6) dans l'évidement (8), un agrafage mécanique de la pièce à joindre métallique (2) et de l'élément de base (3) pouvant être réalisé, et le poinçon (5) comportant une saillie (9) en forme de tenon qui est adaptée à l'évidement (8) du contre-poinçon (6) et peut être introduite dans l'évidement (8) du contre-poinçon (6),
**caractérisé en ce que**
le poinçon (5) et le contre-poinçon (6) sont positionnés dans un guide (10) et peuvent être déplacés l'un vers l'autre ou en s'éloignant l'un de l'autre le long d'un axe de travail principal (A).

9. Dispositif conforme à la revendication 8,
**caractérisé en ce qu'**
il est constitué par une pince clinch à actionnement hydraulique.

10. Dispositif conforme à la revendication 9,
**caractérisé en ce que**
la pince clinch comporte un magasin pour des éléments de base (3).
